# EUROPEAN PATENT APPLICATION

(11) **EP 4 123 624 A1**
(43) Date of publication of application: **25.01.2023**
(21) Application number: 20768244.4
(22) Date of filing: 03.04.2020
(51) Int. Cl.: G09F 9/00

(54) **DISPLAY DEVICE**

(30) Priority: 17.03.2020 CN 202010188808
(71) Applicant: Wuhan China Star Optoelectronics Semiconductor Display Technology Co., Ltd., Wuhan, Hubei 430079 (CN)
(72) Inventor: DING, Feng, Hubei 430079 (CN)
(74) Representative: Stöckeler, Ferdinand
(86) International application number: PCT/CN2020/083234
(87) International publication number: WO 2021/184437

(57) **Abstract**

The prevent invention relates to a display device. The display device includes a case, a chute, and a handheld device. In the display device, by providing a handheld device on the frame of the case of the display device, when using the display device, the customer can extend his finger into the through hole of the handheld device to improve handheld stability and portability; further, a substrate is provided on the inner sidewall of the through hole to improve the comfort of the handheld device, and an anti-skid stripe is provided on the inner sidewall of the through hole to improve the anti-skid performance and stability of the handheld device.

## Description

### BACKGROUND OF INVENTION

The present application claims priority to Chinese patent application no. 202010188808.2 submitted to Chinese Patent Office on March 17, 2020, entitled "display device", the entire contents of which are incorporated herein by reference.

### Field of Invention

The present invention relates to a field of display technology, in particular to a display device.

### Description of Prior Art

A display device can transform the computer's data into various characters, numbers, symbols, or intuitive images for display, and an input tool such as a keyboard can be used to input commands or data into the computer, and system hardware and software are employed to add, delete, and change the display content whenever necessary. Display devices are classified into plasma, liquid crystal, light emitting diode, and cathode ray tube types according to display devices used.

With increase in user demands, a screen-to-body ratio of a current mobile terminal is becoming larger and larger. A larger screen cannot only improve the appearance performance of the mobile terminal, but also improve the display performance. Currently, large-screen mobile terminals are increasingly favored by users.

Although the current large-screen display device can greatly increase a display area of the screen, the larger size also causes problems such as poor portability, difficulty in gripping by the user, difficulty in operation, and so on. Therefore, there is a need to find a novel display device to solve the above problems.

### SUMMARY OF INVENTION

An object of the present invention is to provide a display device which can solve the problems of the existing large-screen display device, such as poor portability, difficulty in gripping by the user, difficulty in operation, and so on.

In order to solve the above problems, the present invention provides a display device, which includes: a case, including at least one frame; a chute recessed in an outer surface of the frame; and a handheld device slidably inserted into the chute.

Further, the handheld device includes: a telescopic plate; and a through hole penetrating the telescopic plate.

Further, the handheld device further includes a substrate attached to an inner sidewall of the through hole.

Further, the substrate is a cotton layer and/or a nylon layer.

Further, an inner sidewall of the through hole is provided with an anti-skid stripe.

Further, the telescopic plate of the handheld device is a bendable structure.

Further, the bendable structure includes: a first plate; and a second plate hinged to the first plate.

Further, the display device further includes: a driving device disposed in the case and configured to control the handheld device to insert into the chute or extend out of the chute.

Further, the driving device includes a linear motor including a putter, and the putter is connected to the telescopic plate of the handheld device.

Further, the chute is located on a bottom or a side of the frame.

The present invention relates to a display device. On the one hand, by providing a handheld device on the frame of the case of the display device, when using the display device, the customer can extend his finger into the through hole of the handheld device to improve handheld stability and portability; on the other hand, a substrate is provided on the inner sidewall of the through hole to improve the comfort of the handheld device, and an anti-skid stripe is provided on the inner sidewall of the through hole to improve the anti-skid performance and stability of the handheld device.

### BRIEF DESCRIPTION OF DRAWINGS

In order to more clearly illustrate the embodiments or the technical solutions of the existing art, the drawings illustrating the embodiments or the existing art will be briefly described below. Obviously, the drawings in the following description merely illustrate some embodiments of the present invention. Other drawings may also be obtained by those skilled in the art according to these figures without paying creative work.
FIG. 1 is a schematic structural diagram of a display device of Embodiment 1.
FIG. 2 is a bottom view of a display device of Embodiment 1.
FIG. 3 is a partially enlarged view of a structure in the dotted frame of FIG. 1.
FIG. 4 is an enlarged view of a through hole.
FIG. 5 is a schematic diagram of connection between a driving device and a handheld device.
FIG. 6 is a schematic structural diagram of a display device of Embodiment 2.
FIG. 7 is a side view of the display device of Embodiment 2.
FIG. 8 is a schematic structural diagram of a display device of Embodiment 3.

Elements in the drawings are designated by reference numerals listed below.
100, display device; 101, display area;
1, case; 2, chute;
3, handheld device; 4, driving device;
5, first panel; 6, second panel;
7, limit slot; 8, limit block;
11, first frame; 12, second frame;
13, third frame; 14, fourth frame;
31, telescopic plate; 32, through hole;
33, substrate; 34, anti-skid stripe;
331, nylon layer; 332, cotton layer;
41, linear motor; 411, putter;
311, first plate; 312, second plate;
313, hinge mechanism.

### DETAILED DESCRIPTION OF PREFERRED EMBODIMENTS

The preferred embodiments of the present invention are described in detail below with reference to the accompanying drawings, in which FIG. Those skilled in the art will more readily understand how to implement the invention. The present invention may, however, be embodied in many different forms and embodiments, and the scope of the invention is not limited to the embodiments described herein.

The following description of the various embodiments is provided to illustrate the specific embodiments of the invention. The spatially relative directional terms mentioned in the present invention, such as "upper", "lower", "before", "after", "left", "right", "inside", "outside", "side", etc. and the like, may be used herein for ease of description to describe one element or feature's relationship to another element(s) or feature(s) as illustrated in the figures which are merely references.

In the drawings, the spatially relative terms are intended to encompass different orientations in addition to the orientation as depicted in the figures.. Moreover, the size and thickness of each component shown in the drawings are arbitrarily shown for ease of understanding and description, and the invention does not limit the size and thickness of each component.

When a component is described as "on" another component, the components are formed in direct contact, and may also include embodiments in which additional features may be formed interposing the first and second features, such that the first and second features may not be in direct contact. When a component is described as "installed to" or "connected to" another component, it can be understood that a component is "directly installed" or "directly connected" to another component, or a component is " installed to" or "connected with" another component through an intermediate component.

### Embodiment 1

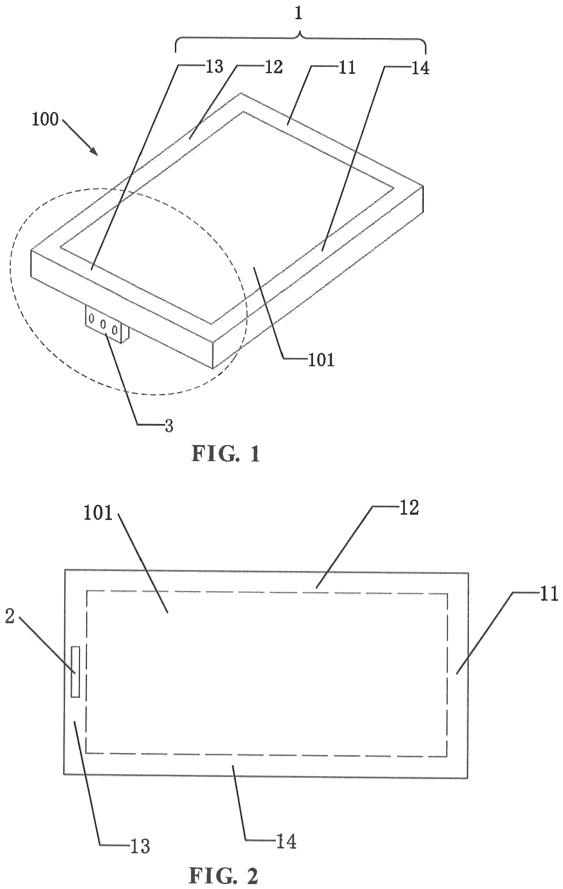

As shown in FIGs. 1 and 2, this embodiment provides a display device 100 including a case 1, a chute 2 and a handheld device 3.

As shown in FIG. 1, the display device 100 includes a display area 101, and the case 1 is provided around the display area 101. The case 1 is constituted by a first frame 11, a second frame 12, a third frame 13 and a fourth frame 14 connected end to end. The first frame 11 is disposed opposite to the third frame 13. The second frame 12 is disposed opposite to the fourth frame 14.

As shown in FIGs. 1 and 2, the chute 2 is recessed in the outer surface of the frame. In this embodiment, the chute 2 is recessed in a bottom surface of the third frame 13.

As shown in FIGs. 1 and 2, the handheld device 3 can be slidably inserted into the chute 2.

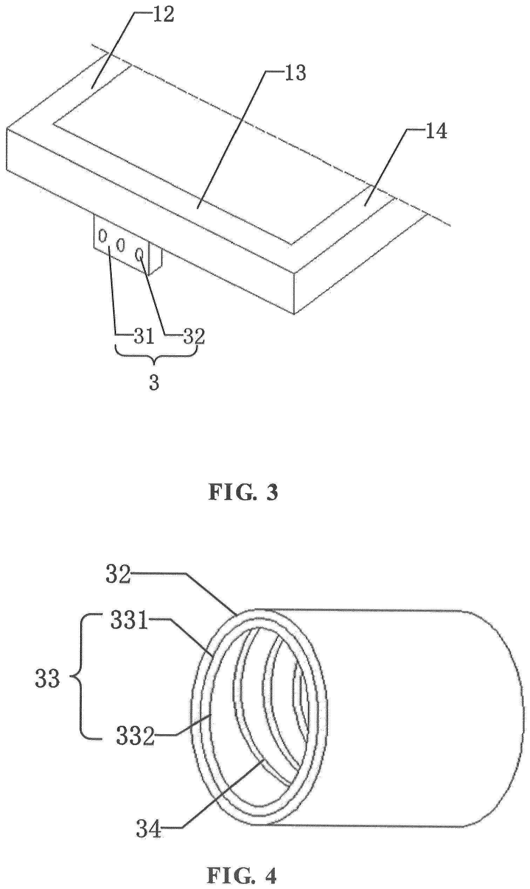

As shown in FIG. 3, the handheld device 3 includes a telescopic plate 31 and a through hole 32. The through hole 32 penetrates the telescopic plate 31. A shape of the through hole 32 may be elliptical or circular. The through hole 32 is mainly configured to facilitate customers to extend their finger into the through hole 32 to better grasp and operate the display device 100, thereby improving the stability and portability of the display device 100.

As shown in FIG. 4, the handheld device 3 further includes a substrate 33 attached to the inner sidewall of the through hole 32. The substrate 33 includes a nylon layer 331 and a cotton layer 332. The nylon layer 331 is attached to the inner sidewall of the through hole 32; the cotton layer 332 is attached to an inner sidewall of the nylon layer 331. The substrate 33 is mainly configured to improve the comfort of the handheld device 3.

As shown in FIG. 4, the inner sidewall of the through hole 32 is further provided with an anti-skid stripe 34. Specifically, the anti-skid stripe 34 is provided on an inner sidewall of the cotton layer 332. The anti-skid stripes 34 are mainly configured to improve the anti-skid performance of the handheld device 3 and prevent finger from slipping out of the through hole 32.

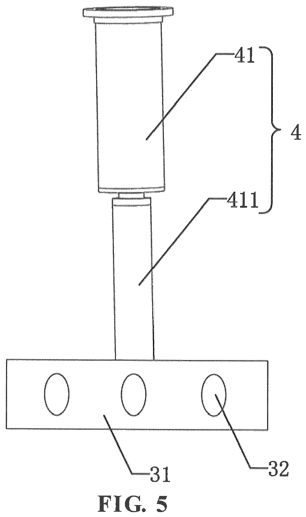

As shown in FIG. 5, the display device 100 further includes a driving device 4, which is provided in the case 1. The driving device 4 includes a linear motor 41. The linear motor 41 includes a putter 411 connected to the telescopic plate 31 of the handheld device 3. The driving device 4 is mainly configured to control the handheld device 3 to be inserted into the chute 2 or extend out of the chute 2.

### Embodiment 2

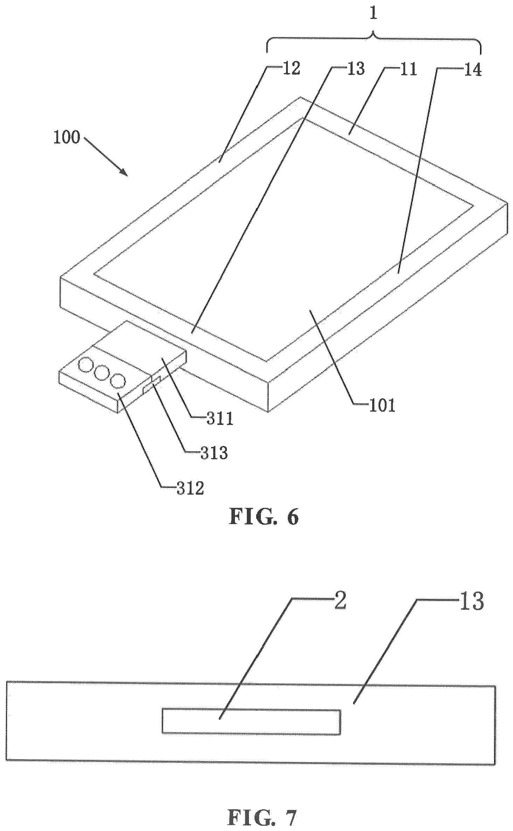

As shown in FIGs. 6 and 7, this embodiment includes most of the technical features of Embodiment 1, and the difference from Embodiment 1 is that: the chute 2 in this embodiment is recessed in a side surface of the third frame 13 instead of being recessed in the bottom surface of the third frame 13 as in Embodiment 1.

As shown in FIG. 6, the telescopic plate 31 in this embodiment has a bendable structure. The bendable structure includes a first plate 311 and a second plate 312. The second plate 312 is hinged to the first plate 311 by a hinge mechanism 313. That is, the second plate 312 can be flipped 90 degrees relative to the first plate 311 through the hinge mechanism 313, so that the finger can extend into the through hole 32 in a plane parallel to the display area 101, improving the user experience and comfort.

By providing a handheld device 3 on the frame of the case 1 of the display device 100, when using the display device 100, the customer can extend his finger into the through hole 32 of the handheld device 3 to improve handheld stability and portability; further, a substrate 33 is provided on the inner sidewall of the through hole 32 to improve the comfort of the handheld device 3, and an anti-skid stripe 34 is provided on the inner sidewall of the through hole 32 to improve the anti-skid performance and stability of the handheld device 3.

### Embodiment 3

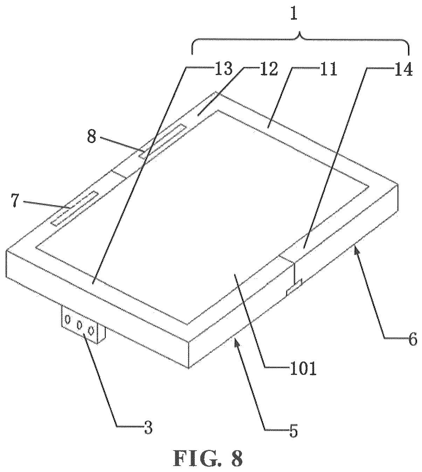

As shown in FIG. 8, this embodiment includes most of the technical features of Embodiment 1, and the difference from Embodiment 1 is that: the display device 100 described in this embodiment is a foldable display device.

As shown in FIG. 8, the display device 100 of this embodiment includes a first panel 5 and a second panel 6. The second panel 6 is hinged on the first panel 5. In an expanded state of the display device 100, the first panel 5 and the second panel 6 constitute a display area 101, and the case 1 is disposed around the display area 101.

As shown in FIG. 8, the display device 100 further includes a limit slot 7 and a limit block 8. In a folded state of the display device 100, the first panel 5 and the second panel 6 are folded to overlap each other, and the limit block 8 is embedded in the limit slot 7, so as to avoid misalignment and the like when the display device 100 is folded.

By providing a handheld device 3 on the frame of the case 1 of the display device 100, when using the display device 100, the customer can extend his finger into the through hole 32 of the handheld device 3 to improve handheld stability and portability; further, a substrate 33 is provided on the inner sidewall of the through hole 32 to improve the comfort of the handheld device 3, and an anti-skid stripe 34 is provided on the inner sidewall of the through hole 32 to improve the anti-skid performance and stability of the handheld device 3.

The display device provided in the embodiments of the present application have been described in detail above. Specific embodiments are used in this document to explain the principles and implementation of the present invention. The descriptions of the above embodiments are only for understanding the method of the present invention and its core ideas, to help understand the technical solution of the present application and its core ideas, and a person of ordinary skill in the art should understand that it can still modify the technical solution described in the foregoing embodiments, or equivalently replace some of the technical features. Such modifications or replacements do not depart the spirit of the corresponding technical solutions beyond the scope of the technical solutions of the embodiments of the present application.

## Claims

1. A display device, comprising:
a case, comprising at least one frame;
a chute recessed in an outer surface of the frame; and
a handheld device slidably inserted into the chute.

2. The display device according to claim 1, wherein the handheld device comprises:
a telescopic plate; and
a through hole penetrating the telescopic plate.

3. The display device according to claim 2, wherein the handheld device further comprises a substrate attached to an inner sidewall of the through hole.

4. The display device according to claim 3, wherein the substrate is a cotton layer and/or a nylon layer.

5. The display device according to claim 2, wherein an inner sidewall of the through hole is provided with an anti-skid stripe.

6. The display device according to claim 1, wherein a telescopic plate of the handheld device is a bendable structure.

7. The display device according to claim 6, wherein the bendable structure comprises:
a first plate; and
a second plate hinged to the first plate.

8. The display device according to claim 1, further comprising:
a driving device disposed in the case, and configured to control the handheld device to insert into the chute or extend out of the chute.

9. The display device according to claim 8, wherein the driving device comprises a linear motor comprising a putter, and the putter is connected to a telescopic plate of the handheld device.

10. The display device according to claim 1, wherein the chute is located on a bottom or a side of the frame.
